# EUROPÄISCHE PATENTSCHRIFT

(11) **EP 2 208 600 B1**
(45) Veröffentlichungstag und Bekanntmachung des Hinweises auf die Patenterteilung: **05.06.2013**
(21) Anmeldenummer: 09174553.9
(22) Anmeldetag: 30.10.2009
(51) Int. Cl.: C04B 35/01, C04B 35/053, C04B 35/057, C04B 35/111, C04B 35/14, C04B 35/20, C04B 35/468, C04B 35/491, C04B 35/565, C04B 35/584, C04B 35/634, C04B 35/632, C04B 35/486, C04B 35/581, C04B 35/583

(54) **Zusammensetzung zur Herstellung von Keramikteilen**
Compound for producing ceramic parts
Composition destinée à la fabrication de pièces de céramique

(30) Priorität: 30.12.2008 DE 102008055182
(43) Veröffentlichungstag der Anmeldung: 21.07.2010
(73) Patentinhaber: Robert Bosch GmbH, 70442 Stuttgart (DE)
(72) Erfinder: Loibl, Thomas, 87561, Oberstdorf (DE); Heeren, Imke, 70199, Stuttgart (DE)

(56) Entgegenhaltungen:
- EP-A1- 0 700 881
- WO-A1-89/07583
- WO-A1-98/30516
- US-A- 4 704 242
- "Spritzgiessen"; "7.3.2.2.3" In: H. Salzmang, H. Scholze: "KERAMIK; 7. Auflage" 30. Oktober 2006 (2006-10-30), Rainer Telle; Springer-Verlag , Berrlin , XP002577264 ISBN: 3540632735 , Seiten 611-617 * Seite 612, Tabelle 76; Seite 616-617, Tabelle 77 *
- ZHANG T ET AL: "Mechanical properties of injection moulding suspensions as a function of ceramic volume fraction and temperature" JOURNAL OF THE EUROPEAN CERAMIC SOCIETY, ELSEVIER SCIENCE PUBLISHERS, BARKING, ESSEX, GB LNKD- DOI:10.1016/0955-2219(91)90033-V, Bd. 7, Nr. 3, 1. Januar 1991 (1991-01-01), Seiten 155-163, XP023185949 ISSN: 0955-2219 [gefunden am 1991-01-01]

## Beschreibung

Die vorliegende Erfindung betrifft eine Zusammensetzung zur Herstellung von Keramikteilen, ein Verfahren zu deren Herstellung sowie deren Verwendung.

### Stand der Technik

Keramiken werden auf Grund ihrer speziellen werkstoffspezifischen Eigenschaften immer stärker in Maschinenbau, Kfz-, Chemie-, Elektro-, Consumer-, Mikrosystem- und Verfahrenstechnik eingesetzt.

Hochkomplexe Geometrien können mithilfe eines Hochdruck-Keramikspritzgußverfahrens (CIM) in großen Stückzahlen wirtschaftlich und zu wettbewerbsfähigen Preisen herstellt werden. Das Keramikspritzgußverfahren ist ein plastisches Formgebungsverfahren, bei dem eine thermoplastische Masse (Compound), welche Keramikpulver und organische Binder umfasst, in ein Werkzeug mit Zielgeometrie eingespritzt wird. Nach Abkühlung wird das Bauteil dem Werkzeug entnommen und kann direkt nachführenden (thermischen) Prozessen, wie Entbinderung und Sinterung, zugeführt werden. Die resultierenden Keramiken bedürfen in der Regel keiner weiteren Nachbearbeitung (as-fired-quality).

Um eine hohe Präzision, Beanspruchbarkeit und Zuverlässigkeit von Keramiken zu erzielen, sind jedoch fehlerfreie Mikrogefüge der Keramiken erforderlich. Die Mikrogefüge der Keramiken werden allerdings stark durch die Zusammensetzung und die Homogenität der thermoplastischen Masse beeinflusst und es können Gefügefehler, beispielsweise Lunker, texturierte Porosität und fehlerhafte Schwindung, auftreten, welche die die Belastbarkeit der Keramiken deutlich reduzieren.

Konventionelle Compoundsysteme bestehen derzeit aus einer Vielzahl an organischen Komponenten, wie Bindern und anderen Additiven, welche in ihrer Mischung die erforderliche Fließfähigkeit im heißen Zustand und nach Abkühlung eine hohe Bauteilfestigkeit gewährleisten sollen. Die hohe Anzahl an Komponenten macht konventionelle Compoundsysteme jedoch sehr empfindlich auf Schwankungen in der Rohstoffzugabemenge und -qualität. Darüber hinaus haben Prozessparameter einen erheblichen Einfluss auf die resultierende Produktgüte, weshalb vor der Freigabe neuer Produktionschargen in einer aufwändigen Vorbemusterung die erforderlichen Prozessparameter eingestellt und die Gefügegüte der Keramiken abgeprüft werden sollte. Selbst bei optimal eingestellten konventionellen Compoundsystemen und Prozessparametern ist es derzeit jedoch nicht möglich, fehlerfreie Keramiken herzustellen, die den stetig steigenden Anforderungen, insbesondere im Automobilbereich, gerecht werden.

Teil 7.3.2.2.3 der Veröffentlichung "Keramik", 7. Auflage, Rainer Telle, Springer-Verlag, von H. Scholz befasst sich auf den Seiten 611 bis 617 mit dem Spritzgießen von keramischen Massen.

Die Veröffentlichung "Mechanical Properties of Injection Moulding Suspensions as a Function of Ceramic Volume Fraction and Temperature", Journal of the European Ceramic Society, 7, 1991, S. 155 bis 163, von T. Zhang und J. R. G. Evans vergleicht an keramischen Spritzgussmassen gemessene Elastizitätsmodule, Zugfestigkeiten und Querdehnungszahlen mit entsprechenden Modellrechnungen.

Die Druckschrift D3 beschreibt Formmassen, welche ein organisches Bindemittel als Komponente A, mindestens ein Nitrid, Carbonitrid oder Carbid mindestens eines Übergangsmetalls oder von Bor als Komponente B, und mindestens ein Oxid von Aluminium, Zirkonium, Yttrium, Cer oder Magnesium als Komponente C umfassen.

### Offenbarung der Erfindung

Gegenstand der vorliegenden Erfindung ist eine Zusammensetzung, insbesondere ein so genanntes "Compoundsystem", zur Herstellung von Keramikteilen, insbesondere mittels eines Keramikspritzgußverfahrens, welche eine Keramikkomponente, eine Kopplungskomponente, und eine Binderkomponente umfasst.

Im Rahmen der vorliegenden Erfindung werden unter dem Begriff "Keramikkomponente" insbesondere Keramikpulver, Keramikgranulate, beispielsweise Sprühgranulate, und Keramikpulver-Keramikgranulat-Mischungen verstanden, welche eine keramische Verbindung oder eine Mischung aus zwei oder mehr unterschiedlichen keramischen Verbindungen umfassen.

Unter dem Begriff "Kopplungskomponente" kann im Rahmen der vorliegenden Erfindung insbesondere eine Verbindung oder eine Mischung aus zwei oder mehr Verbindungen verstanden werden, welche eine, insbesondere homogene, Ankopplung der Binderkomponente an die Keramikkomponente bewirken kann.

Aus der erfindungsgemäßen Zusammensetzung können vorteilhafterweise komplex geformte Keramikteile hergestellt werden, welche keine oder nur wenige Gefügefehler aufweisen. Darüber hinaus kann die erfindungsgemäße Zusammensetzung vorteilhafterweise eine hohe Stabilität und Homogenität aufweisen und in einem großen Prozessfenster verarbeitet werden. Dies hat den Vorteil, dass auf eine zeitintensive Vorbemusterung verzichtet werden kann. Ein weiterer Vorteil der erfindungsgemäßen Zusammensetzung ist, dass die Zusammensetzung gute Fließeigenschaften aufweisen kann, so dass beim Zusammenfließen der Zusammensetzung nach werkzeugbedingten Strömungsteilungen keine Bindenähte, welche herkömmlicherweise nach der Sinterung in ihrer Struktur erhalten bleiben und Schwachstellen oder gar Risse im Gefüge darstellen, entstehen können.

Im Rahmen einer weiteren bevorzugten Ausführungsform der Erfindung umfasst die Zusammensetzung > 45 Volumenprozent bis ≤ 65 Volumenprozent, beispielsweise ≥ 50 Volumenprozent bis ≤ 60 Volumenprozent, insbesondere ≥ 54 Volumenprozent bis ≤ 57 Volumenprozent, an Keramikkomponente, und/oder ≥ 0,01 Volumenprozent bis ≤ 10 Volumenprozent beispielsweise ≥ 0,1 Volumenprozent bis ≤ 5 Volumenprozent, insbesondere ≥ 0,5 Volumenprozent bis ≤ 2,0 Volumenprozent, an Kopplungskomponente, und/oder ≥ 35 Volumenprozent bis ≤ 55 Volumenprozent beispielsweise ≥ 37 Volumenprozent bis ≤ 50 Volumenprozent, insbesondere ≥ 41 Volumenprozent bis ≤ 45,5 Volumenprozent, an Binderkomponente. Insbesondere kann die Zusammensetzung aus ≤ 45 Volumenprozent bis ≤ 65 Volumenprozent, beispielsweise ≥ 50 Volumenprozent bis ≤ 60 Volumenprozent, insbesondere ≥ 54 Volumenprozent bis ≤ 57 Volumenprozent, an Keramikkomponente, und/oder ≥ 0,01 Volumenprozent bis ≤ 10 Volumenprozent beispielsweise ≥ 0,1 Volumenprozent bis ≤ 5 Volumenprozent, insbesondere ≥ 0,5 Volumenprozent bis ≤ 2,0 Volumenprozent, an Kopplungskomponente, und/oder ≥ 35 Volumenprozent bis ≤ 55 Volumenprozent beispielsweise ≥ 37 Volumenprozent bis ≤ 50 Volumenprozent, insbesondere ≥ 41 Volumenprozent bis ≤ 45,5 Volumenprozent, an Binderkomponente bestehen. Die Volumenprozentbeträge von Keramikkomponente, Kopplungskomponente und Binderkomponente werden zweckmäßigerweise derart ausgewählt, dass diese in Summe 100 Volumenprozent ergeben. Derartige Zusammensetzungen können vorteilhafterweise eine gesteigerte Entformungsstabilität beziehungsweise keine oder nur wenige Entformungsrisse aufweisen. Durch den hohen einsetzbaren Keramikanteil kann zudem eine verzugfreie Entbinderung und Sinterung von lateral ausladenden Bauteilen gewährleistet werden.

Der Keramikkomponentenanteil, Kopplungskomponentenanteil und Binderkomponentenanteil kann dabei abhängig von der Feinheit beziehungsweise der spezifischen Oberfläche der Keramikkomponente sein. Insbesondere kann der Keramikkomponentenanteil bei Keramikkomponenten mit einer hohen spezifischen Oberfläche, beispielsweise 100 m³/g, gemessen mit der BET-Methode, geringer sein, als bei Keramikkomponenten mit einer geringen spezifischen Oberfläche, beispielsweise < 100 m³/g, gemessen mit der BET-Methode. Der Kopplungskomponentenanteil und Binderkomponentenanteil können bei Keramikkomponenten mit einer hohen spezifischen Oberfläche, beispielsweise 100 m³/g, gemessen mit der BET-Methode, höher sein, als bei Keramikkomponenten mit einer geringen spezifischen Oberfläche, beispielsweise < 100 m³/g, gemessen mit der BET-Methode.

Im Rahmen einer weiteren, besonders bevorzugten Ausführungsform der Erfindung umfasst die Keramikkomponente eine oder mehrere oxidische keramische Verbindungen, eine oder mehrere carbidische keramische Verbindungen, eine oder mehrere nitridische keramische Verbindungen oder eine Mischung davon. Beispielsweise kann die Keramikkomponente mindestens eine keramische Verbindung, ausgewählt aus der Gruppe bestehend aus Aluminiumoxid, Zirkoniumoxid, Bariumtitanat, Steatit, Blei-Zirkonat-Titanat (PZT), Siliziumcarbid, Aluminiumnitrid, Siliziumnitrid, Bornitrid, Siliziumoxid, Bariumoxid, Magnesiumoxid, Calziumoxid und Mischungen davon, umfassen beziehungsweise daraus bestehen.

Die Kopplungskomponenten zeichnen sich dadurch aus, dass sie mit der Oberfläche der verwendeten Keramikkomponenten eine chemische Bindung eingehen können. Bei der chemischen Bindung handelt es sich z.B. um eine kovalente, ionische oder eine koordinative Bindung zwischen der Kopplungskomponente und der Keramikkomponente, aber auch um Wasserstoffbrückenbindungen bzw. van der Waals Wechselwirkungen. Unter einer koordinativen Bindung wird z.B. eine Komplexbildung verstanden. So kann zwischen den funktionellen Gruppen der Kopplungskomponente und der Oberfläche der Keramikkomponente z.B. eine Säure/Base-Reaktion nach Brönsted oder Lewis, eine Komplexbildung oder eine Veresterungsreaktion stattfinden. Durch diese Ankopplung der Kopplungskomponente ist in der Regel ein spezifischer Einfluss, insbesondere bezüglich der Material- bzw. System- und oder Funktionseigenschaften der Gesamtmasse und oder der Keramikkomponente verbunden. Dabei kann es sich z.B. um eine anteilige oder vollständige Hydrophobierung der Oberfläche der Keramikkomponente handeln. Diese Modifikation der Keramikkomponente durch Anbindung der Kopplungskomponente ermöglicht eine verbesserte, in diesem Zusammenhang auch als Kopplung bezeichnete, Wechselwirkung zwischen der durch das Anbinden der Kopplungskomponente modifizierten Keramikkomponente und der z.B. anteilig, oder vollständig unpolaren Binderkomponente, z.B. über van der Waals Wechselwirkungen. Dies gewährleistet insbesondere eine verbesserte Homogenität der Gesamtmasse. Des Weiteren ist es für die Homogenisierung vorteilhaft wenn die an die Keramikkomponente angekoppelte Kopplungskomponente Struktureinheiten aufweist die Interaktion mit der Binderkomponente ermöglicht.

Im Rahmen einer besonders bevorzugten Ausführungsform der Erfindung umfasst die Kopplungskomponente mindestens eine Verbindung, ausgewählt aus der Gruppe bestehend aus
- Carbonsäuren, insbesondere Fettsäuren,
- Carbonsäurederivaten, insbesondere Fettsäurederivaten,
- sauren Polyethern,
- Phosphatestern (Phosphorsäureestern) und
   Mischungen davon. Beispielsweise kann die Kopplungskomponente aus einer der vorgenannten Verbindungen oder aus einer Mischung aus den vorgenannten Verbindungen zumindest im Wesentlichen bestehen. Weiterhin beispielsweise kann die Kopplungskomponente aus einer der vorgenannten Verbindungen zumindest im Wesentlichen bestehen. Dabei wird unter "im Wesentlichen" verstanden, dass die Kopplungskomponente produktionsbedingte Verunreinigungen und Nebenprodukte umfassen kann.
   Im Rahmen einer weiteren, besonders bevorzugten Ausführungsform der Erfindung umfasst die Kopplungskomponente mindestens eine Verbindung, ausgewählt aus der Gruppe bestehend aus
- Carbonsäuren, insbesondere Fettsäuren,
- hydroxifunktionellmodifizierten Carbonsäuren, insbesondere Fettsäuren,
- hydroxifunktionellmodifizierten, pigmentaffine Gruppen umfassende Carbonsäuren, insbesondere Fettsäuren,
- Säuregruppen umfassenden Polyethern, insbesondere Säuregruppen umfassenden aliphatischen Polyethern,
- carbonsäuremodifizierten, insbesondere fettsäuremodifizierten, Polymeren,
- carbonsäuremodifizierten, insbesondere fettsäuremodifizierten, Polyestern,
- Phosphatestern
   und Mischungen davon. Beispielsweise kann die Kopplungskomponente aus einer der vorgenannten Verbindungen oder aus einer Mischung aus den vorgenannten Verbindungen zumindest im Wesentlichen bestehen. Weiterhin beispielsweise kann die Kopplungskomponente aus einer der vorgenannten Verbindungen zumindest im Wesentlichen bestehen. Dabei wird unter "im Wesentlichen" verstanden, dass die Kopplungskomponente produktionsbedingte Verunreinigungen und Nebenprodukte umfassen kann. Im Rahmen der vorliegenden Erfindung können unter "pigmentaffinen Gruppen" insbesondere Ester-, Ether- und Carboxylgruppen verstanden werden.
   Im Rahmen einer weiteren, besonders bevorzugten Ausführungsform der Erfindung weisen die Carbonsäuren, Fettsäuren, modifizierenden Carbonsäuren beziehungsweise modifizierenden Fettsäuren der Kopplungskomponente eine Kettenlänge von 8 bis 30 Kohlenstoffatomen auf.
   Im Rahmen einer weiteren, besonders bevorzugten Ausführungsform der Erfindung weisen die Carbonsäuren, Fettsäuren, modifizierenden Carbonsäuren beziehungsweise modifizierenden Fettsäuren der Kopplungskomponente eine verzweigte Kohlenstoffkette auf.
   Im Rahmen einer weiteren, besonders bevorzugten Ausführungsform der Erfindung weisen die Carbonsäuren, Fettsäuren, modifizierenden Carbonsäuren beziehungsweise modifizierenden Fettsäuren der Kopplungskomponente mindestens eine Ester- und/oder Ether- und/oder weitere Carboxylgruppe, insbesondere als reaktive Seitengruppe (Verzweigung), an der Kohlenstoffkette auf.
   Im Rahmen einer weiteren, besonders bevorzugten Ausführungsform der Erfindung weisen die Carbonsäuren, Fettsäuren, modifizierenden Carbonsäuren beziehungsweise modifizierenden Fettsäuren der Kopplungskomponente eine ungesättigte Kohlenstoffkette auf. Dabei wird unter einer "ungesättigten Kohlenstoffkette" eine Kohlenstoffkette verstanden, welche eine oder mehrere Doppelbindungen aufweist.
   Im Rahmen einer weiteren, besonders bevorzugten Ausführungsform der Erfindung weisen die Carbonsäuren, Fettsäuren, modifizierenden Carbonsäuren beziehungsweise modifizierenden Fettsäuren der Kopplungskomponente eine im wesentlichen vollständig ungesättigte, insbesondere vollständig ungesättigte, Kohlenstoffkette auf. Dabei wird unter einer "im wesentlichen vollständig ungesättigten Kohlenstoffkette" eine Kohlenstoffkette verstanden, bei der das Verhältnis zwischen Kettenkohlenstoffatomen und Doppelbindungen in einem Bereich von ≥ 11:1 bis ≤ 24:1, insbesondere von ≥ 18:2 bis ≤ 22:6, liegt.
   Im Rahmen einer weiteren, besonders bevorzugten Ausführungsform der Erfindung umfasst die Kopplungskomponente mindestens eine Carbonsäure, insbesondere Fettsäure, ausgewählt aus der Gruppe bestehend aus gesättigten Fettsäuren, insbesondere Caprin-, Laurin-, Myristin-, Palmitin-, Margarin-, Stearin-, Arachin-, Behen-, Lignocerin-, Cerotin-, Montan-, und/oder Melissensäure; einfach ungesättigten Fettsäuren, insbesondere Undecylen-, Myristolein-, Palmitolein-, Petroselin-, Öl-, Elaidin-, Vaccen-, Gadolein-, Icosen-, Cetolein-, Eruca- und/oder Nervonsäure,; mehrfach ungesättigten Fettsäuren, insbesondere Linol-, Alpha-Linolen-, Gamma-Linolen-, Calendula-, Punicin-, Alpha-Eleostearin-, Arachidon-, Timnodon-, Clupanodon- und/oder Cervonsäure, Fettsäuren mit funktionellen Gruppen, insbesondere Vernol- und Rizinolsäuren, und Mischungen davon. Im Rahmen einer Ausgestaltung dieser Ausführungsform besteht die Kopplungskomponente aus einer der vorgenannten Carbonsäuren, insbesondere Fettsäuren, oder aus einer Mischung aus den vorgenannten Carbonsäuren, insbesondere Fettsäuren.
   Im Rahmen einer weiteren, besonders bevorzugten Ausführungsform der Erfindung umfasst die Kopplungskomponente mindestens einen Phosphatester, ausgewählt aus der Gruppe bestehend aus Phosphorsäureestern von Poly-C2-C4-Alkylenglykolmonoethern und/oder Poly-C2-C4alkylenglykolmonostern einer Carbonsäure, wie EFKA-5066, EFKA-5070, EFKA-5207, EFKA-5244, EFKA-6220, EFKA-6225, EFKA-6230, EFKA-8503, EFKA-8510, EFKA-8511, EFKA-8512, EFKA-8530, EFKA-8531, EFKA-8532 (Handelsnamen der Firma CIBA Specialty Chemicals Inc., Klybeckstr. 141, P.O. Box, 4002 Basel, Schweiz), Rhodafac PA23 (Handelsname ehemals der Firma Rhodia), polyoxyethylenierten Alkyletherphosphaten und Mischungen davon. Beispielsweise kann die Kopplungskomponente aus einem der vorgenannten Phosphatester oder aus einer Mischung aus den vorgenannten Phosphatestern zumindest im Wesentlichen bestehen. Weiterhin beispielsweise kann die Kopplungskomponente aus einem der vorgenannten Phosphatester zumindest im Wesentlichen bestehen. Dabei wird unter "im Wesentlichen" verstanden, dass die Phosphatester produktionsbedingte Verunreinigungen und Nebenprodukte umfassen können.
   Zum Beispiel kann die Kopplungskomponente einen
- Phosphatester der allgemeinen Formel (1): 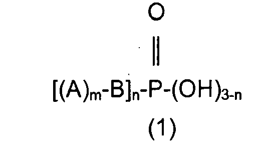 oder dessen Salz sein, wobei
   - n: für die Zahl 1 oder 2 steht,
   - m: für eine Zahl von 1 bis 4 steht,
   - A: für eine Monohydroxylgruppe, insbesondere eine Poly-C2-C4-Alkylenglycolmonoethergruppe, beispielsweise C1-C20-Alkylether, vorzugsweise Methylether (MePEG), (MePPG), Butylether (BuPPG), Alkylphenolether (APE), C12-C20-Fettalkoholether oder C10-C15-Oxoalkoholether, und/oder eine Poly-C2-C4-Alkylenglycolcarbonsäuremonoestergruppe, insbesondere Poly-C2-C4-Alkylenglycolmonolaurate, Poly-C2-C4-Alkylenglycolmonostearate, Poly-C2-C4-Alkylenglycolmonooleateoder PolyC2-C4-Alkylenglycolbenzoate, steht,
   - B: für eine Mono-, Di-, Tri- oder Polyhydroxy-Di-, -Tri- oder -Multi-Carbonsäuregruppe, beispielsweise Weinsäure, Maleinsäure, 2-methylmaleinsäure, 3-Hydroxy-3-methylglutarsäure, 5-Hydroxyisophthalsäure, Ascorbinsäure oder Zitronensäure, vorzugsweise Maleinsäure oder Zitronensäure, steht, welche über die Hydroxygruppe mit der Phosphorsäure und über eine der Carbonsäuregruppen mit der Mono-hydroxylgruppe (A) verbunden ist, wobei die verbleibenden Carbonsäu- regruppen frei bleiben oder teilweise oder vollständig mit einer weiteren Monohydroxylgruppe (A) unter Ausbildung eines verzweigten Esters verestert werden,
   (insbesondere kann [(A)ₘ-B] für R²O- stehen, wobei R² für eine C6-20-Alkylgruppe oder einer ethoxylierte Alkylgruppe, beispielsweise der allgemeinen Formel (3): C12-C18-Alkyl-(OCH₂CH₂)_{z} mit z von 0 bis 4, insbesondere von 2 bis 4, steht); und/oder
- ein Polyoxyethylenierten Alkyletherphosphat der allgemeinen Formel (2): 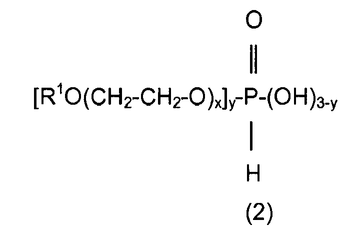 oder dessen Salz sein, wobei
   - x: für die Zahl der Ethylenoxide, beispielsweise für eine Zahl von 2 bis 12, insbesondere für 6, 7, oder 8, steht,
   - y: für 1, 2 oder 3, insbesondere 2, steht,
   - R¹: für eine lineare oder verzweigte Alkylgruppe, insbesondere mit 1 bis 20 Kohlenstoffatomen, eine Phenylgruppe, oder eine Alkylarylgruppe, insbesondere eine Alkylphenylgruppe, insbesondere mit einer Alkylkette mit 8 bis 12 Kohlenstoffatomen, beispielsweise für eine Hexyl-, Octyl-, Decyl-, Dodecyl-, Oleyl- oder Nonylphenylgruppe, insbesondere für eine Methylgruppe, steht, wobei R¹ bei m = 2 oder 3 identische oder unterschiedlich sein kann;
   umfassen. Insbesondere kann die Kopplungskomponente aus einer der vorgenannten Verbindungen oder aus einer Mischung aus den vorgenannten Verbindungen zumindest im Wesentlichen bestehen. Weiterhin beispielsweise kann die Kopplungskomponente aus einer der vorgenannten Verbindungen zumindest im Wesentlichen bestehen. Dabei wird unter "im Wesentlichen" verstanden, dass die Kopplungskomponente produktionsbedingte Verunreinigungen und Nebenprodukte, beispielsweise im Fall der Verbindungen der allgemeinen Formel (1) in Form von Triestern, umfassen kann.
   Im Rahmen einer weiteren Ausführungsform der Erfindung ist die Kopplungskomponente lösungsmittelfrei.
   Im Rahmen der vorliegenden Erfindung können beispielsweise die Produkte des EFKA-Typs, beispielsweise EFKA 8512, EFKA 6230, EFKA 6220 und EFKA 5207, insbesondere EFKA 5207, (Handelsnamen der Firma CIBA Specialty Chemicals Inc., Klybeckstr. 141, P.O. Box, 4002 Basel, Schweiz), als Kopplungskomponente eingesetzt werden
   Im Rahmen einer weiteren, besonders bevorzugten Ausführungsform der Erfindung ist die Binderkomponente eine organische Binderkomponente.
   Im Rahmen einer weiteren, besonders bevorzugten Ausführungsform der Erfindung umfasst die Binderkomponente mindestens eine Verbindung, ausgewählt aus der Gruppe bestehend aus
- Polyestern, insbesondere Polyesterwachsen, beispielsweise acyklische oder cyklische, gesättigte oder ungesättigte Polyesterwachsen,
- Polyolefinen, insbesondere Polyolefinwachsen, beispielsweise Paraffinkohlenwasserstoffen,
- Polyoxyalkanenpolymeren, insbesondere Polyethylenglykol mit einem mittleren Molekulargewicht von < 4000 g/mol und/oder Polyethylenglykol (Polyoxyethylen) mit einem mittleren Molekulargewicht von ≥ 4000 g/mol, beispielsweise von ≥ 5000 g/mol bis ≤ 20000 g/mol,
- Polymeren mit Ether- und/oder Esterstrukturen, beispielsweise Polyestern mit Etherstrukturen und/oder Polyolefinen mit Ether- und/oder Esterstrukturen, weiter beispielsweise Polyester-Polyoxyalkan-Polymeren und/oder Polyolefin-Polyoxyalkan-Polymeren, insbesondere Polyestern mit Polyethylenglykol-Strukturen und/oder Polyolefinen mit Polyethylenglykol-Strukturen, weiter insbesondere Polyester mit Polyethylenglykol-Strukturen mit einem mittleren Molekulargewicht von < 4000 g/mol und/oder Polyethylenglykol-Strukturen mit einem mittleren Molekulargewicht von ≥ 4000 g/mol, beispielsweise von ≥ 5000 g/mol bis ≤ 20000 g/mol, und/oder Polyolefinen mit Polyethylenglykol-Strukturen mit einem mittleren Molekulargewicht von < 4000 g/mol und/oder Polyethylenglykol-Strukturen mit einem mittleren Molekulargewicht von ≥ 4000 g/mol, beispielsweise von ≥ 5000 g/mol bis ≤ 20000 g/mol, und
Mischungen davon. Beispielsweise kann die Binderkomponente aus einer der vorgenannten Verbindungen oder aus einer Mischung aus den vorgenannten Verbindungen zumindest im Wesentlichen bestehen. Weiterhin beispielsweise kann die Binderkomponente aus einer der vorgenannten Verbindungen zumindest im Wesentlichen bestehen. Dabei wird unter "im Wesentlichen" verstanden, dass die Binderkomponente produktionsbedingte Verunreinigungen und Nebenprodukte umfassen kann.

Im Rahmen einer weiteren, besonders bevorzugten Ausführungsform der Erfindung umfasst die Binderkomponente ein Polymer-Blend. Insbesondere kann die Binderkomponente aus einem Polymer-Blend bestehen. Vorzugsweise umfasst das Polymer-Blend mindestens eine Verbindung, ausgewählt aus der Gruppe bestehend aus
- Polyestern, insbesondere Polyesterwachsen, beispielsweise acyklische oder cyklische, gesättigte oder ungesättigte Polyesterwachsen,
- Polyolefinen, insbesondere Polyolefinwachsen, beispielsweise Paraffinkohlenwasserstoffen,
- Polyoxyalkanenpolymeren, insbesondere Polyethylenglykol mit einem mittleren Molekulargewicht von < 4000 g/mol und/oder Polyethylenglykol (Polyoxyethylen) mit einem mittleren Molekulargewicht von ≥ 4000 g/mol, beispielsweise von ≥ 5000 g/mol bis ≤ 20000 g/mol,
- Polymeren mit Ether- und/oder Esterstrukturen, beispielsweise Polyestern mit Etherstrukturen und/oder Polyolefinen mit Ether- und/oder Esterstrukturen, weiter beispielsweise Polyester-Polyoxyalkan-Polymeren und/oder Polyolefin-Polyoxyalkan-Polymeren, insbesondere Polyestern mit Polyethylenglykol-Strukturen und/oder Polyolefinen mit Polyethylenglykol-Strukturen, weiter insbesondere Polyester mit Polyethylenglykol-Strukturen mit einem mittleren Molekulargewicht von < 4000 g/mol und/oder Polyethylenglykol-Strukturen mit einem mittleren Molekulargewicht von ≥ 4000 g/mol, beispielsweise von ≥ 5000 g/mol bis ≤ 20000 g/mol, und/oder Polyolefinen mit Polyethylenglykol-Strukturen mit einem mittleren Molekulargewicht von < 4000 g/mol und/oder Polyethylenglykol-Strukturen mit einem mittleren Molekulargewicht von ≥ 4000 g/mol, beispielsweise von ≥ 5000 g/mol bis ≤ 20000 g/mol, und
Mischungen davon. Beispielsweise kann das Polymer-Blend aus einer der vorgenannten Verbindungen oder aus einer Mischung aus den vorgenannten Verbindungen zumindest im Wesentlichen bestehen. Dabei wird unter "im Wesentlichen" verstanden, dass das Polymer-Blend produktionsbedingte Verunreinigungen und Nebenprodukte umfassen kann.

Im Rahmen einer weiteren, besonders bevorzugten Ausführungsform der Erfindung beträgt das Molekulargewicht des Polymer-Blends ≥ 10.000 g/mol bis ≤ 130.000 g/mol, insbesondere von ≥ 14.000 g/mol bis ≤100.000 g/mol. Beispielsweise kann die Binderkomponente ein (Polyethylen)-(Poly(oxy-1,2-ethanediyl) alpha-hydro, omega-hydroxy) basiertes Polymer-Blend, beispielsweise Ester-Wachs sein.

Im Rahmen der vorliegenden Erfindung können beispielsweise die Produkte Licomont EK583, Licomont EK583G (Handelsnamen, ehemals der Firma Clariant, jetzt der Firma eMBe Products & Service GmbH, Gemeindewald 7, 86672 Thierhaupten, Deutschland), Embemould C und Embemould M (Handelsnamen der Firma eMBe Products & Service GmbH, Gemeindewald 7, 86672 Thierhaupten, Deutschland), als Binderkomponente eingesetzt werden.

Im Rahmen einer weiteren, besonders bevorzugten Ausführungsform der Erfindung liegen die Keramikkomponente, die Kopplungskomponente und die Binderkomponente in der Zusammensetzung homogen verteilt vor.

Im Rahmen einer weiteren, besonders bevorzugten Ausführungsform der Erfindung umfasst die erfindungsgemäße Zusammensetzung
- ≥ 45 Volumenprozent bis ≤ 65 Volumenprozent, beispielsweise
   ≥ 50 Volumenprozent bis ≤ 60 Volumenprozent, insbesondere
   ≥ 54 Volumenprozent bis ≤ 57 Volumenprozent, an Keramikkomponente, und
- ≥ 0,01 Volumenprozent bis ≤ 10 Volumenprozent beispielsweise
   ≥ 0,1 Volumenprozent bis ≤ 5 Volumenprozent, insbesondere
   ≥ 0,5 Volumenprozent bis ≤ 2,0 Volumenprozent, an einer Fettsäure oder einem EFKA-Produkt, beispielsweise EFKA 8512, EFKA 6230, EFKA 6220 oder EFKA 5207, insbesondere EFKA 5207, oder einer Mischung davon, und
- ≥ 35 Volumenprozent bis ≤ 55 Volumenprozent beispielsweise
   ≥ 37 Volumenprozent bis ≤ 50 Volumenprozent, insbesondere
   ≥ 41 Volumenprozent bis ≤ 45,5 Volumenprozent, Licomont EK583, Licomont EK583G, Embemould C oder Embemould M, insbesondere Embemould C, oder einer Mischung davon.

Die Volumenprozentbeträge werden dabei zweckmäßigerweise derart ausgewählt, dass diese in Summe 100 Volumenprozent ergeben.

Im Rahmen einer Ausführungsform besteht die Zusammensetzung aus
- ≥ 45 Volumenprozent bis ≤ 65 Volumenprozent an Keramikkomponente, und
- ≥ 0,01 Volumenprozent bis ≤ 10 Volumenprozent einem Phosphatesters als Kopplungskomponente und
- ≥ 35 Volumenprozent bis ≤ 55 Volumenprozent an einem Polymer-Blend als Binderkomponente.

Im Rahmen der vorliegenden Erfindung hat sich herausgestellt, dass die Zusammensetzung auf ein Dreikomponentensystem aus einer Keramikkomponente, einer Kopplungskomponente und eine Binderkomponente reduziert werden kann.

Im Rahmen einer bevorzugten Ausführungsform der Erfindung besteht daher die erfindungsgemäße Zusammensetzung aus einer Keramikkomponente, einer Kopplungskomponente und einer Binderkomponente. Beispielsweise kann die erfindungsgemäße Zusammensetzung aus einer Keramikkomponente; einer Fettsäure oder einem EFKA-Produkt, beispielsweise EFKA 8512, EFKA 6230, EFKA 6220 oder EFKA 5207, insbesondere EFKA 5207, als Kopplungskomponente; und Licomont EK583, Licomont EK583G, Embemould C oder Embemould M, insbesondere Embemould C, als Binderkomponente bestehen. Eine Reduktion auf ein 3-Komponentensystem hat vorteilhafterweise zur Folge, dass aufgrund der Verringerung der Zahl der Ausgangsstoffe und damit der variierenden Prozessparameter, wie der Qualität der Ausgangsstoffe, Schwankungen der Produktqualität verringert werden können. Darüber hinaus können Mischfehler reduziert und der Aufwand (Qualität, Zeit, Kosten) bei der Aufbereitung erheblich verringert werden.

Insbesondere kann die erfindungsgemäße Zusammensetzung aus
- ≥ 45 Volumenprozent bis ≤ 65 Volumenprozent, beispielsweise
   ≥ 50 Volumenprozent bis ≤ 60 Volumenprozent, insbesondere
   ≥ 54 Volumenprozent bis ≤ 57 Volumenprozent, an Keramikkomponente, und
- ≥ 0,01 Volumenprozent bis ≤ 10 Volumenprozent beispielsweise
   ≥ 0,1 Volumenprozent bis ≤ 5 Volumenprozent, insbesondere
   ≥ 0,5 Volumenprozent bis ≤ 2,0 Volumenprozent, an einer Fettsäure oder einem EFKA-Produkt, beispielsweise EFKA 8512, EFKA 6230, EFKA 6220 oder EFKA 5207, insbesondere EFKA 5207, und
- ≥ 35 Volumenprozent bis ≤ 55 Volumenprozent beispielsweise
   ≥ 37 Volumenprozent bis ≤ 50 Volumenprozent, insbesondere
   ≥ 41 Volumenprozent bis ≤ 45,5 Volumenprozent, Licomont EK583, Licomont EK583G, Embemould C oder Embemould M, insbesondere Embemould C,
bestehen. Die Volumenprozentbeträge werden dabei zweckmäßigerweise derart ausgewählt, dass diese in Summe 100 Volumenprozent ergeben.

Ein weiterer Gegenstand der vorliegenden Erfindung ist ein Verfahren zur Herstellung einer erfindungsgemäßen Zusammensetzung, welches den Verfahrensschritt: Mischen der Keramikkomponente, der Kopplungskomponente und der Binderkomponente; umfasst.

Im Rahmen einer bevorzugten Ausführungsform des erfindungsgemäßen Verfahrens erfolgt das Mischen bei einer Temperatur von ≥ 70 °C bis ≤ 220°C, insbesondere von ≥ 100 °C bis ≤ 150°C.

Im Rahmen einer weiteren, bevorzugten Ausführungsform des erfindungsgemäßen Verfahrens erfolgt das Mischen, insbesondere durch Kneten, in einer Knetvorrichtung, beispielsweise einem Zweischneckenkneter, einer Schwerwalze oder einem Sigmaschaufelkneter.

Die Koppiungskomponente kann beim Mischen sowohl einzeln als auch in Form einer Vormischung zugegeben werden.

Im Rahmen einer besonders bevorzugten Ausführungsform des erfindungsgemäßen Verfahrens werden beim Mischen die Kopplungskomponente und die Binderkomponente in Form einer Vormischung zugegeben. Im Rahmen einer bevorzugten Ausgestaltung dieser Ausführungsform umfasst die Vormischung ein Binderkomponentengranulat, welches mit der Kopplungskomponente innig vermengt bzw. homogenisiert ist. Auf diese Weise kann vorteilhafterweise die Homogenisierungszeit zusätzlich beschleunigt werden.

Im Rahmen einer weiteren, besonders bevorzugten Ausführungsform des erfindungsgemäßen Verfahrens werden die Keramikkomponente, die Kopplungskomponente und die Binderkomponente zu einer homogenen Mischung vermischt. Dabei wird im Rahmen der vorliegenden Erfindung unter einer "homogenen Mischung von Keramikkomponente, Kopplungskomponente und Binderkomponente" auch eine Mischung verstanden, in welcher die Keramikkomponente und mit der Kopplungskomponente vermengtes Binderkomponentengranulat homogen verteilt vorliegen.

Hinsichtlich weiterer Merkmale und Vorteile des erfindungsgemäßen Verfahrens wird hiermit explizit auf die Ausführungen im Zusammenhang mit der erfindungsgemäßen Zusammensetzung verwiesen.

Ein weiterer Gegenstand der vorliegenden Erfindung ist eine Zusammensetzung zur Herstellung von Keramikteilen, insbesondere mittels eines Keramikspritzgußverfahrens, welche durch das erfindungsgemäße Verfahren hergestellt ist.

Hinsichtlich weiterer Merkmale und Vorteile der durch das erfindungsgemäße Verfahren hergestellten Zusammensetzung wird hiermit explizit auf die Ausführungen im Zusammenhang mit der erfindungsgemäßen Zusammensetzung und dem erfindungsgemäßen Verfahren verwiesen.

Ein weiterer Gegenstand der vorliegenden Erfindung ist die Verwendung einer erfindungsgemäßen Zusammensetzung oder erfindungsgemäß hergestellten Zusammensetzung zur Herstellung von Keramikteilen, insbesondere mittels eines Keramikspritzgußverfahrens.

Hinsichtlich weiterer Merkmale und Vorteile der erfindungsgemäßen Verwendung wird hiermit explizit auf die Ausführungen im Zusammenhang mit der erfindungsgemäßen Zusammensetzung und dem erfindungsgemäßen Verfahren verwiesen.

### Zeichnungen

Weitere Vorteile und vorteilhafte Ausgestaltungen des erfindungsgemäßen Gegenstandes werden durch die Abbildungen veranschaulicht und in der nachfolgenden Beschreibung erläutert. Dabei ist zu beachten, dass die Abbildungen nur beschreibenden Charakter haben und nicht dazu gedacht sind, die Erfindung in irgendeiner Form einzuschränken. Es zeigen:

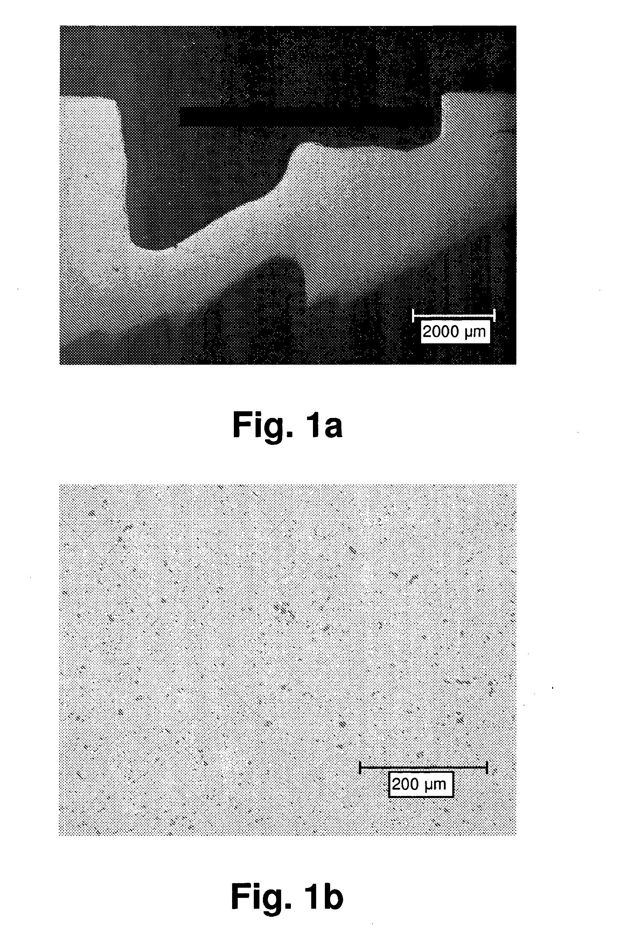

- Fig. 1a: eine photographische Abbildung eines Gefügeschliffs eines aus einer erfindungsgemäßen 3-Komponenten-Zusammensetzung gefertigten Bauteils;
- Fig. 1 b: eine photographische Abbildung eines Gefügeschliffs eines aus einer erfindungsgemäßen 3-Komponenten-Zusammensetzung gefertigten Bauteils;
- Fig. 2a: eine photographische Abbildung eines Gefügeschliffs eines aus einer herkömmlichen 6-Komponenten-Zusammensetzung gefertigten Bauteils; und
- Fig. 2b: eine photographische Abbildung eines Gefügeschliffs eines aus einer herkömmlichen 6-Komponenten-Zusammensetzung gefertigten Bauteils.

Für die vergleichende Darstellung der Gefügegüte wurden Bauteile aus einer erfindungsgemäßen 3-Komponenten-Zusammensetzung, bestehend aus 55,6 Volumenprozent Aluminiumoxid, 1,2 Volumenprozent EFKA (Handelsname der Firma CIBA Specialty Chemicals Inc., Klybeckstr. 141, P.O. Box, 4002 Basel, Schweiz) und 43,2 Volumenprozent Embemould C (Handelsname der Firma eMBe Products & Service GmbH, Gemeindewald 7, 86672 Thierhaupten, Deutschland), und aus einer konventionellen Polypropylen und Polyethylenglykol umfassenden 6-Komponenten-Zusammensetzung mit vergleichbaren Prozessparametern hergestellt.

Die Figuren 1a und 1b zeigen, dass das Bauteil, welches aus der erfindungsgemäßen Zusammensetzung hergestellt wurde, eine geringe Porosität aufweist sowie homogen, frei von Lunkern und gerichteter Porosität (Textur) ist.

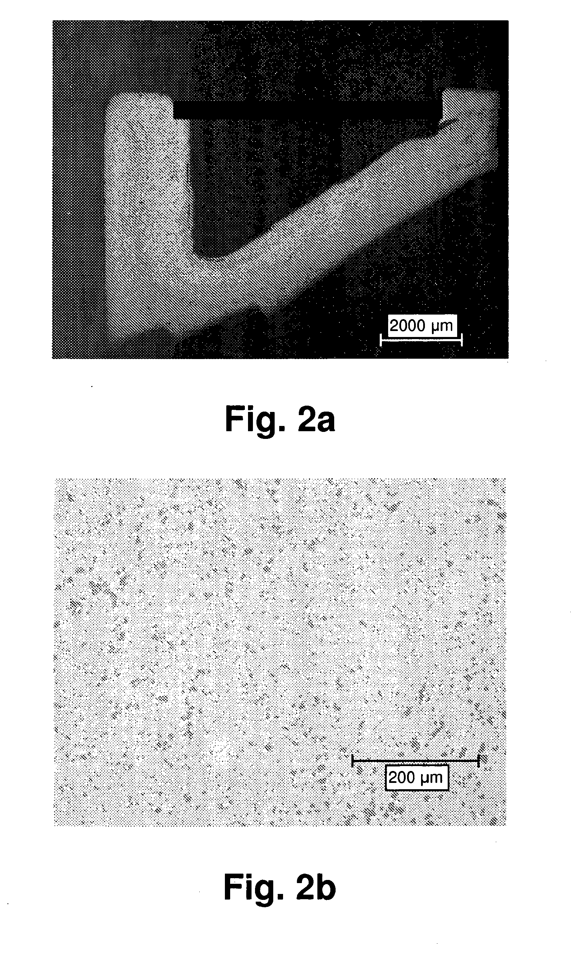

Die Figuren 2a und 2b zeigen, dass das Bauteil, welches aus der konventionellen Polypropylen und Polyethylenglykol umfassenden 6-Komponenten-Zusammensetzung hergestellt wurde, im Gegensatz zu dem in den Figuren 1a und 1b gezeigten Bauteil, eine texturierte Porosität entlang der Masseströmung aufweist.

## Patentansprüche

1. Zusammensetzung zur Herstellung von Keramikteilen, umfassend
- ein Keramikkomponente,
- eine Kopplungskomponente, und
- eine Binderkomponente,
wobei die Kopplungskomponente mindestens eine Verbindung, ausgewählt aus der Gruppe, bestehend aus
- hydroxyfunktionellmodifizierten Carbonsäuren,
- hydroxyfunktionellmodifizierten, pigmentaffine Gruppen umfassende Carbonsäuren,
- Säuregruppen umfassenden Polyethern.
- carbonsäuremodiffizierten Polyestern,
- Phophatestem
und Mischungen davon, umfasst.

2. Zusammensetzung nach Anspruch 1, **dadurch gekennzeichnet, dass** die Zusammensetzung ≥ 45 Volumenprozent bis ≤ 65 Volumenprozent an Keramikkomponente, ≥ 0,01 Volumenprozent bis ≤ 10 Volumenprozent an Kopplungskomponente und ≥ 35 Valumenprozent bis ≤ 55 Volumenprozent an Binderkomponente umfasst, wobei die Volumenprozentbeträge von Keramikkomponente, Kopplungskomponente und Binderkomponente derart ausgewählt sind, dass diese in Summe 100 Volumenprozent ergeben.

3. Zusammensetzung nach Anspruch 1 oder 2, **dadurch gekennzeichnet, dass** die Kopplungskomponente mindestens eine Verbindung, ausgewähalt aus der Gruppe bestehend aus
- hydroxyfunktionelimodifizierten Fettsäuren,
- hydroxyfunktionelimodifizierten, pigmentaffine Gruppen umfassende Fettsäuren,
- Säuregruppen umfassenden aliphatischen Polyethern,
- carbonsäuremodifizierten Polymeren
und Mischungen davon, umfasst

4. Zusammensetzung nach einem der Ansprüche 1 bis 3, **dadurch gekennzeichnet, dass** die Carbonsäuren oder Fettsäuren der Kopplungskomponente:
- eine Kettenlänge von 8 bis 30 Kohlenstoffatomen, und/oder
- eine verzweigte Kohlenstoffkette, und/oder
- mindestens ein Ester- und/oder Ether- und/oder weitere Carboxylgruppe an der Kohlenstoffkette, und/oder
- eine ungesättigte Kohlenstoffkette.
aufweisen.

5. Zusammensetzung nach einem der Ansprüche 1 bis 4, **dadurch gekennzeichnet, dass** die Kopplungskomponente mindestens eine Carbonsäure, ausgewählt aus der Gruppe bestehend aus Caprin-, Laurin-, Myristin-, Palmitin-, Margarin-, Stearin-, Arachin-, Behen-, Lignocerin-, Cerotin-, Montan-, Melissen-: Undecylen-, Myristolein-, Palmitolein-, Petröselin-, Öl-, Elaidin-, Vaccen-, Gadolein-, leosen-, Cetolein-, Eruca-, Nervon-; Linol-, Alpha-Linolen-, Camma-Linolen-, Calendula-, Punicin-, Alpha-Fleostearin-, Arachidon-, Timnodon-, Clupanadon-, Cervon-, Vernol-, Pizinoisaure und Mischungen davon, umfasst.

6. Zusammensetzung nach einem der Ansprüche 1 bis 5, **dadurch gekennzeichnet, dass** die Kopplungskomponente mindestens einen Phosphatester, ausgewählt aus der Gruppe bestehend aus Phosphorsäureestem von Poly-C2-C4-Alkylenglykolmonoethern und/oder Poly-C2-C4-Alkylenglykolmonostern einer Carbonsäure, polyoxyethylenierten Alkyletherphosphaten und Mischungen davon, umfasst.

7. Zusammensetzung nach einem der Ansprüche 1 bis 6, **dadurch gekennzeichnet, dass** die Binderkomponente mindestens eine Verbindung, ausgewählt aus der Gruppe bestehend aus
- Polyestern, insbesondere Polyesterwachsen, beispielsweise acyklische oder cykische, gesättigte oder ungesättigte Polyesterwachsen,
- Polyolefinen, insbesondere Polyolefinwachsen, beilspielsweise Paraffinkohlenwasserstoffen,
- Polyoxyalkanenpolymeren, insbesondere Polyethylenglykol mit einem mittieran Molekulargewicht von < 4000 g/mol und/oder Polyethylenglykol (Polyoxyethylen) mit einem mittleren Molekulargewicht von ≥ 4000 g/mol, beispielsweise von ≥ 5000 g/mol bis ≤ 20000 g/mol,
- Polymeren mit Ether- und/oder Esterstrukturen, bsispielsweise Polyestem mit Etherstrukturen und/oder Polyolefinen mit Ether- und/oder Esterstrukturen, weiter beispielsweise Polyester-Polyoxyalkan-Polymeren und/oder Polyolefin-Polyoxyalken-Polymeren, insbesondere Polyestern mit Polyethylenglykol-Strukturen und/oder Polyolefinen mit Polyethylenglykol-Strukturen, weiter insbesondere Polyester mit Polyethylenglykol-Strukturen mit einem mittleren Molekulargewicht von < 4000 g/mol und/oder Polyethylenglylcol-Strukturen mit einem mittleren Molekulargewicht von ≥ 4000 g/mol, beispielsweise von ≥ 5000 g/mol bis ≤ 20000 g/mol, und/oder Polyolefinen mit Polyethylenglykol-Strukturen mit einem mittieren Molekulargewicht von < 4000 g/mol und/oder Polyethylenglykol-Strukturen mit einem mittieren Molekulargewicht von ≥ 4000 g/mol, beispielsweise von ≥ 5000 g/mol bis ≤ 20000 g/mol, und
Mischungen davon, umfasst.

8. Zusammensetzung nach einem der Ansprüche 1 bis 7, **dadurch gekennzeichnet, dass** die Binderkomponente ein Polymer-Blend umfasst, wobei das Molekulargewicht des Polymer-Blends ≥ 10.000 g/mol bis ≤ 130.000 g/mol beträgt.

9. Zusammensetzung nach einem der Ansprüche 1 bis 8, **dadurch gekennzeichnet, dass** die Keramikkomponente eine oder mehrere oxidische keramische Verbindungen, eine oder mehrere carbidische keramische Verbindungen, eine oder mehrere nitridische keramische Verbindungen oder eine Mischung davon umfasst.

10. Zusammensetzung nach einem der Ansprüche 1 bis 3, **dadurch gekennzeichnet, dass** die Zusammensetzung aus einer Keramikkomponente, einer Kopplungskomponente und einer Binderkomponente besteht.

11. Verfahren zur Herstellung einer Zusammensetzung nach einem der Ansprüche 1 bis 10, umfassend den Verfahrensschritt: Mischen der Keramikkomponente, der Kopplungskomponente und der Binderkomponente nach einem der Ansprüche 1 bis 10.

12. Verfahren nach Anspruch 11, **dadurch gekennzeichnet, dass** das Nischen bei einer Temperatur von ≥ 70 °C bis ≤ 220°C erfolgt.

13. Verfahren nach Anspruch 11 oder 12, **dadurch gekennzeichnet, dass** beim Mischen die Kopplungskomponente und die Binderkomponente in Form einer Vormischung zugegeben werden.

14. Verfahren nach einem der Ansprüche 11 bis 13, **dadurch gekennzeichnet dass** die Vormischung ein Binderkomponentengranulat umfasst, welches mit der Kopplungskomponente vermengt oder homogenisiert ist.

15. Verwendung einer Zusammensetzung nach einem der Ansprüche 1 bis 10 zur Herstellung von Keramikteifen.

## Claims

1. Composition for producing ceramic parts, which comprises
- a ceramic component,
- a coupling component and
- a binder component,
where the coupling component comprises at least one compound selected from the group consisting of
- hydroxy-functionally modified carboxylic acids,
- hydroxy-functionally modified carboxylic acids comprising groups having an affinity for pigments,
- polyethers comprising acid groups,
- carboxylic acid-modified polyesters,
- phosphate esters
and mixtures thereof.

2. Composition according to Claim 1, **characterized in that** the composition comprises from ≥ 45% by volume to ≤ 65% by volume of ceramic component, from ≥ 0.01% by volume to ≤ 10% by volume of coupling component and from ≥ 35% by volume to ≤ 55% by volume of binder component, where the percentages by volume of ceramic component, coupling component and binder component are selected so that they add up to a total of 100 percent by volume.

3. Composition according to Claim 1 or 2, **characterized in that** the coupling component comprises at least one compound selected from the group consisting of
- hydroxy-functionally modified fatty acids,
- hydroxy-functionally modified fatty acids comprising groups having an affinity for pigments,
- aliphatic polyethers comprising acid groups,
- carboxylic acid-modified polymers and mixtures thereof.

4. Composition according to any of Claims 1 to 3, **characterized in that** the carboxylic acids or fatty acids of the coupling component have:
- a chain length of from 8 to 30 carbon atoms and/or
- a branched carbon chain and/or
- at least one ester group and/or ether group and/or further carboxyl group on the carbon chain and/or
- an unsaturated carbon chain.

5. Composition according to any of Claims 1 to 4, **characterized in that** the coupling component comprises at least one carboxylic acid selected from the group consisting of capric, lauric, myristic, palmitic, margaric, stearic, arachidic, behenic, lignoceric, cerotinic, montanic, melissic, undecylenoic, myristoleic, palmitoleic, petroselic, oleic, elaidic, vaccenic, gadoleic, icosenic, cetoleic, erucic, nervonic, linoleic, alpha-linolenic, gamma-linolenic, calendic, punicic, alpha-eleostearic, arachidonic, timnodonic, clupanodonic, cervonic, vernolic, ricinoleic acid and mixtures thereof.

6. Composition according to any of Claims 1 to 5, **characterized in that** the coupling component comprises at least one phosphate ester selected from the group consisting of phosphoric esters of poly-C2-C4-alkylene glycol monoethers and/or poly-C2-C4-alkylene glycol monoesters of a carboxylic acid, polyethoxylated alkyl ether phosphates and mixtures thereof.

7. Composition according to any of Claims 1 to 6, **characterized in that** the binder component comprises at least one compound selected from the group consisting of
- polyesters, in particular polyester waxes, for example acyclic or cyclic, saturated or unsaturated polyester waxes,
- polyolefins, in particular polyolefin waxes, for example paraffinic hydrocarbons,
- polyoxyalkane polymers, in particular polyethylene glycol having an average molecular weight of < 4000 g/mol and/or polyethylene glycol (polyoxyethylene) having an average molecular weight of ≥ 4000 g/mol, for example from ≥ 5000 g/mol to ≤ 20 000 g/mol,
- polymers having ether and/or ester structures, for example polyesters having ether structures and/or polyolefins having ether and/or ester structures, also, for example, polyesterpolyoxyalkane polymers and/or polyolefinpolyoxyalkane polymers, in particular polyesters having polyethylene glycol structures and/or polyolefins having polyethylene glycol structures, also, in particular, polyesters having polyethylene glycol structures having an average molecular weight of < 4000 g/mol and/or polyethylene glycol structures having an average molecular weight of ≥ 4000 g/mol, for example from ≥ 5000 g/mol to ≤ 20 000 g/mol, and/or polyolefins having polyethylene glycol structures having an average molecular weight of < 4000 g/mol and/or polyethylene glycol structures having an average molecular weight of ≥ 4000 g/mol, for example from ≥ 5000 g/mol to ≤ 20 000 g/mol, and mixtures thereof.

8. Composition according to any of Claims 1 to 7, **characterized in that** the binder component comprises a polymer blend, where the molecular weight of the polymer blend is from ≥ 10 000 g/mol to ≤ 130 000 g/mol.

9. Composition according to any of Claims 1 to 8, **characterized in that** the ceramic component comprises one or more oxidic ceramic compounds, one or more carbidic ceramic compounds, one or more nitridic ceramic compounds or a mixture thereof.

10. Composition according to any of Claims 1 to 9, **characterized in that** the composition consists of a ceramic component, a coupling component and a binder component.

11. Process for producing a composition according to any of Claims 1 to 10, which comprises the process step: mixing of the ceramic component, the coupling component and the binder component according to any of Claims 1 to 10.

12. Process according to Claim 11, **characterized in that** the mixing is carried out at a temperature of from ≥ 70°C to ≤ 220°C.

13. Process according to Claim 11 or 12, **characterized in that** the coupling component and the binder component are added in the form of a premix during mixing.

14. Process according to any of Claims 11 to 13, **characterized in that** the premix comprises binder component granules which have been mixed or homogenized with the coupling component.

15. Use of a composition according to any of Claims 1 to 10 for producing ceramic parts.

## Revendications

1. Composition pour la fabrication de pièces céramiques, comprenant :
- un composant céramique,
- un composant de couplage et
- un composant liant,
le composant de couplage comprenant au moins un composé choisi dans le groupe constitué par
- les acides carboxyliques modifiés par des fonctions hydroxy,
- les acides carboxyliques comprenant des groupes à affinité avec les pigments, modifiés par des fonctions hydroxy,
- les polyéthers comprenant des groupes acides,
- les polyesters modifiés par des acides carboxyliques,
- les esters de phosphate
et leurs mélanges.

2. Composition selon la revendication 1, **caractérisée en ce que** la composition comprend ≥ 45 pour cent en volume à ≤ 65 pour cent en volume de composant céramique, ≥ 0,01 pour cent en volume à ≤ 10 pour cent en volume de composant de couplage et ≥ 35 pour cent en volume à ≤ 55 pour cent en volume de composant liant, les pourcentages en volume du composant céramique, du composant de couplage et du composant liant étant choisis de manière à ce que leur somme soit de 100 pour cent en volume.

3. Composition selon la revendication 1 ou 2, **caractérisée en ce que** le composant de couplage comprend au moins un composé choisi dans le groupe constitué par :
- les acides gras modifiés par des fonctions hydroxy,
- les acides gras comprenant des groupes à affinité avec les pigments, modifiés par des fonctions hydroxy,
- les polyéthers aliphatiques comprenant des groupes acides,
- les polymères modifiés par des acides carboxyliques, et leurs mélanges.

4. Composition selon l'une quelconque des revendications 1 à 3, **caractérisée en ce que** les acides carboxyliques ou les acides gras du composant de couplage présentent :
- une longueur de chaîne de 8 à 30 atomes de carbone et/ou
- une chaîne carbonée ramifiée et/ou
- au moins un groupe ester et/ou éther et/ou carboxyle supplémentaire sur la chaîne carbonée et/ou
- une chaîne carbonée insaturée.

5. Composition selon l'une quelconque des revendications 1 à 4, **caractérisée en ce que** le composant de couplage comprend au moins un acide carboxylique choisi dans le groupe constitué par l'acide caprique, l'acide laurique, l'acide myristique, l'acide palmitique, l'acide margarique, l'acide stéarique, l'acide arachidique, l'acide béhénique, l'acide lignocérique, l'acide cérotique, l'acide montanique, l'acide mélissique, l'acide undécylénique, l'acide myristoléique, l'acide palmitoléique, l'acide pétrosélinique, l'acide oléique, l'acide élaïdique, l'acide vaccénique, l'acide gadoléique, l'acide icosénique, l'acide cétoléique, l'acide érucique, l'acide nervonique, l'acide linoléique, l'acide alphalinolénique, l'acide gamma-linolénique, l'acide calendulique, l'acide punicique, l'acide alphaéléostéarique, l'acide arachidonique, l'acide timnodonique, l'acide clupanodonique, l'acide cervonique, l'acide vernolique, l'acide ricinoléique et leurs mélanges.

6. Composition selon l'une quelconque des revendications 1 à 5, **caractérisée en ce que** le composant de couplage comprend au moins un ester de phosphate choisi dans le groupe constitué par les esters de l'acide phosphorique de monoéthers de polyalkylène glycol en C2-C4 et/ou les monoesters de polyalkylène glycol en C2-C4 d'un acide carboxylique, les éther-phosphates d'alkyle polyoxyéthylénés et leurs mélanges.

7. Composition selon l'une quelconque des revendications 1 à 6, **caractérisée en ce que** le composant liant comprend au moins un composé choisi dans le groupe constitué par :
- les polyesters, notamment les cires de polyester, par exemple les cires de polyester acycliques ou cycliques, saturées ou insaturées,
- les polyoléfines, notamment les cires de polyoléfines, par exemple les hydrocarbures paraffiniques,
- les polymères de polyoxyalcanes, notamment le polyéthylène glycol d'un poids moléculaire moyen < 4 000 g/mol et/ou le polyéthylène glycol (polyoxyéthylène) d'un poids moléculaire moyen ≥ 4 000 g/mol, par exemple de ≥ 5 000 g/mol à ≤ 20 000 g/mol,
- les polymères contenant des structures éther et/ou ester, par exemple les polyesters contenant des structures éther et/ou les polyoléfines contenant des structures éther et/ou ester, également par exemple les polymères polyester-polyoxyalcane et/ou les polymères polyoléfine-polyoxyalcane, notamment les polyesters contenant des structures polyéthylène glycol et/ou les polyoléfines contenant des structures polyéthylène glycol, plus particulièrement les polyesters contenant des structures polyéthylène glycol d'un poids moléculaire moyen < 4 000 g/mol et/ou des structures polyéthylène glycol d'un poids moléculaire moyen ≥ 4 000 g/mol, par exemple de ≥ 5 000 g/mol à ≤ 20 000 g/mol, et/ou les polyoléfines contenant des structures polyéthylène glycol d'un poids moléculaire moyen < 4 000 g/mol et/ou des structures polyéthylène glycol d'un poids moléculaire moyen ≥ 4 000 g/mol, par exemple de ≥ 5 000 g/mol à ≤ 20 000 g/mol, et leurs mélanges.

8. Composition selon l'une quelconque des revendications 1 à 7, **caractérisée en ce que** le composant liant comprend un alliage de polymères, le poids moléculaire de l'alliage de polymères étant de ≥ 10 000 g/mol à ≤ 130 000 g/mol.

9. Composition selon l'une quelconque des revendications 1 à 8, **caractérisée en ce que** le composant céramique comprend un ou plusieurs composés céramiques oxydiques, un ou plusieurs composés céramiques carburiques, un ou plusieurs composés céramiques nitruriques, ou leur mélange.

10. Composition selon l'une quelconque des revendications 1 à 9, **caractérisée en ce que** la composition est constituée d'un composant céramique, d'un composant de couplage et d'un composant liant.

11. Procédé de fabrication d'une composition selon l'une quelconque des revendications 1 à 10, comprenant l'étape de procédé : le mélange du composant céramique, du composant de couplage et du composant liant selon l'une quelconque des revendications 1 à 10.

12. Procédé selon la revendication 11, **caractérisé en ce que** le mélange a lieu à une température de ≥ 70 °C à ≤ 220 °C.

13. Procédé selon la revendication 11 ou 12, **caractérisé en ce que**, lors du mélange, le composant de couplage et le composant liant sont ajoutés sous la forme d'un prémélange.

14. Procédé selon l'une quelconque des revendications 11 à 13, **caractérisé en ce que** le prémélange comprend un granulat du composant liant, qui est mélangé ou homogénéisé avec le composant de couplage.

15. Utilisation d'une composition selon l'une quelconque des revendications 1 à 10 pour la fabrication de pièces céramiques.
